(19)

**Europäisches Patentamt**
**European Patent Office**
**Office européen des brevets**

(11) **EP 3 932 211 A1**

(12) **EUROPEAN PATENT APPLICATION**

(43) Date of publication:
**05.01.2022  Bulletin 2022/01**

(51) Int Cl.:
*A23J 1/10* *(2006.01)*     *A23J 1/02* *(2006.01)*
*A23J 3/04* *(2006.01)*     *A23L 13/40* *(2016.01)*

(21) Application number: **20382571.6**

(22) Date of filing: **29.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Paviso Alimentación, S.L.**
**41520 Sevilla (ES)**

(72) Inventor: **González López, Iván**
**41520 Sevilla (ES)**

(74) Representative: **Isern Patentes y Marcas S.L.**
**Avda. Diagonal, 463 Bis, 2°**
**08036 Barcelona (ES)**

(54) **FUNCTIONAL COLLAGEN PROTEINS FOR PREPARING MEAT PRODUCTS**

(57)     The present invention is related to functional collagen proteins with a high hydroxyproline content suitable for preparing meat products and the process for obtaining said proteins from meat waste or second category meat products. The present invention provides functional collagen proteins which exhibit good physicochemical and organoleptic properties that make them suitable for preparing high added value meat products and nutritional supplements.

EP 3 932 211 A1

**Description**

OBJECT OF THE INVENTION

The present invention is related to functional collagen proteins with a high hydroxyproline content suitable for preparing meat products and the process for obtaining said proteins from meat waste or second category meat products. The present invention is related to the use of said functional collagen proteins in the preparation of high added value meat products and nutritional supplements, as well as to said final products.

BACKGROUND OF THE INVENTION

Meat is a source of highly digestible protein for humans, with a higher protein content and better amino acid pattern compared to vegetable-derived proteins, wherein nutritional quality is determined by the digestibility in the small intestine, i.e., the bio-availability of amino acids. Despite the trend towards diet changes with non-consumption of animal-derived foodstuffs, especially in developed countries, some of the main reasons are related with animal welfare and the environment, although these trends can change in time. In recent years, there has been an increasing interest in the integral use of by-products resulting from the procurement process of meat products, as well as in the reduction or elimination of the waste and the surplus feedstock generated in the production processes in the food industry. Another emergent need is to be able to provide an added value to a series of feedstocks and meat by-products which have a significant interest in the food industry and more specifically in the meat industry.

Meat can be considered an important source of amino acids and peptides with biological activity, for example, in the prevention of sarcopenia (degenerative loss of muscular mass and strength when aging or leading a sedentary life), as indicated by the study disclosed by Srihongthong et al., the Protein Journal 31(6):466-76 · May 2012. These confirmed the antibacterial and antioxidant activity, the peptides obtained from the meat of the *Crocodylus siamensis,* and they attributed said activity to the presence of amino acids: valine, leucine, proline, histidine, thyrosine, tryptophan, phenillanine, cysteine, glutamic acid, aspartic acid, lysine, and arginine in the primary structure thereof.

Likewise, meat is the main source of collagen, the most abundant protein in the organism representing between 20 % and 30 % of total proteins. Collagen is composed of amino acids, of which lysine together with proline and hydroxyproline (proline-derivative) are present in higher amounts. Collagen deficiency in nutrition is appreciated among other factors, in premature aging, in the form of loss of elasticity and smoothness of the skin, hair and nails or in the increase in joint, ligaments, tendons and muscle pain. All of this points to the need for ensuring a diet rich in nutrients which favours the synthesis of this important structural protein. Many of the foodstuffs with high collagen content are not very advisable for a daily diet due to the obvious health risks, whether it is due to their high fat content (dry meats, gelatinous portions of animals) or sugar content (gelatinous desserts).

Therefore, the development of proteins and peptides with functional and biological value, for example, hydrolised collagen proteins (obtained from products which contain collagen) or with a high content of essential amino acids is very valued in the industry and they exhibit an added value in the agri-food market for human use. As much for its potential to enrich food or nutritional supplements, as to enhance their nutritional, organoleptic and technological characteristics. Even, to be able to develop products or excipients which improve the beneficial aspects of meat or derivatives thereof and to develop nutritional complements or pharmaceutical products for use thereof in the prevention of diseases.

The transformation of feedstock, meat waste and by-products into functional proteins or peptides, generally poses a challenge and a difficulty when introducing them in the production system thereof or in products with high commercial added value.

The present invention solves the problems stated herein, by means of the development of new functional proteins possessing good physicochemical, nutritional and organoleptic properties. The functional proteins of the present invention, possess physicochemical characteristics that provide them with high functionality, highly valued quality when introducing it in food formulas which further contribute to secure a hygiene and health quality of the final products obtained. The functional collagen proteins of the invention further have the advantage that they can be obtained from meat waste or second category meat products by means of industrially viable and environmentally-friendly processes.

BRIEF DESCRIPTION OF THE INVENTION

The first aspect of the present invention is related to functional collagen proteins of poultry origin characterised in that they are soluble in water, have a hydroxyproline percentage by weight greater than 8 % with reference to the total weight and have the ability to form gels.

In the context of this invention, the term functional collagen protein, also referred to as protein hydrolisates or hydrolised proteins, refers to complex mixtures comprising oligopeptides, peptides, and amino acids that are obtained from partial or total hydrolysis of proteins contained in products of poultry origin comprising collagen, preferably in high amounts. These products of poultry origin may be bones, skins, tendons and nerves from animals of poultry origin, preferably from chicken. The functional collagen proteins of the invention may further contain a small percentage by weight of other substances such as fats or ashes in the composition thereof. Therefore, in the context of the present invention the term protein content of the functional collagen protein refers to the oligopeptide, peptide and/or amino acid content comprised in the functional collagen protein or hydrolised protein.

In the context of this invention the term meat preparations comprises fresh meat, including meat that has been cut up, to which foodstuff products, seasonings or additives (also referred to as untransformed meat preparations) have been added and fresh meat that has been subjected to transformations which are not sufficient to alter the muscle fibre structure or, to eliminate the characteristics of fresh meat, that is, the cut surface retains the properties of fresh meat (referred to as processed meat preparations).

In the context of this invention the term meat product refers to transformed products resulting from the processing of meat or of the new processing of these transformed products, such that the cut surface shows that the product no longer has the characteristics of fresh meat. That is, the meat preparation differs from the meat product, among other things, in the degree of transformation of the muscle fibre in the cut surface. If the transformation is sufficient to alter the inner structure of the muscle fibre and the cut surface retains the properties of fresh meat. Preferably, the meat products of the present invention are those products that contain poultry and/or game meat intended for human consumption. Meat products may be fresh, raw-marinated, raw-cured, heat treated, salt meats, meat prepared dishes and other meat derivatives.

Meat products can be raw or heat treated.

Raw meat products are those subjected to a technological process which does not include a heat treatment and are selected from a list consisting of raw, fresh, fermented and salted meat products.

Raw fresh meat products are the raw products prepared with ground meat and fat, with or without the addition of by-products and/or extenders and/or approved additives, dry meats or not, which may be cured or not and smoked or not. For example, said products are selected from a list consisting of: hamburgers, fresh sausages, fresh pork botifarra, spread mince, raw meat mass, bratwurst and mettwurst.

Raw fermented meat products are the raw products prepared with ground or minced meat and fat or whole pieces of meat , dry meats or not which are subjected to a maturation process which confers them the organoleptic and preservability characteristics thereof, with the addition or not of starter cultures and/or approved additives, being able to be cured or not, dried or not and smoked or not. For example, said products are selected from a list consisting of: dry sausages, salamis, spreadable pastes, raw ham, raw fermented pepperoni and bacon, sobrassada, pepperoni and cervelat.

Raw salted meat products are the raw products elaborated with meat pieces or by-products and preserved by means of a salting process, being able to be cured or not, smoked or not and dried or not. For example, said products are selected from a list consisting of salted giblets, bacon and dry cured beef.

The term heat treated meat products refers to the meat products which have been subjected to some type of heat treatment during the production thereof. Said products may be selected from the list consisting of: dry meats and moulded meats; cured and smoked whole pieces; semi-finished meat products and preserved meats.

Dry meat and moulded meat products are those manufactured with a type of meat or a mix of 2 or more meats and fat, grounded and/or minced, raw or cooked, with or without the addition of by-products and/or extenders and/or approved additives, placed in natural or artificial casings or moulds and which are subjected to one or more of the curing, drying, smoking and cooking treatments.

The cured and smoked whole pieces are the meat products manufactured with whole anatomic pieces and approved additives, with addition or not of extenders, wherein the smoking, curing and cooking processes have a main role. Said products are selected from a list consisting of, hams, bacon, smoked pork loin, shoulder ham and others.

Semi-finished meat products are those manufactured with ground or minced meat or in pieces, with addition or not of fatty tissue, by-products, extenders and approved additives, which have received a heat treatment during the preparation thereof, but which need to be cooked in order to be consumed. Said products are selected from a list consisting of, croquettes, reconstituted products (also referred to as restructured), formed products, for example; meat sticks, nuggets, other breaded products and semi-cooked products.

Preserved meats are meats or meat products which are adequately heat treated in closed, hermetic containers, which may be selected from a list consisting of, cans, tubes, artificial casings or bags of flexible materials and which can be stored for a long time.

The functional collagen proteins of the first aspect are obtained from feedstock or by-products of poultry origin, preferably from chicken and have a high nutritional value among other things, due to the low fat and sugar content thereof, as well as very good organoleptic properties, such as flavour, smell and texture. They further exhibit a good ability to form gels, to provide texture and/or emulsifying capacity to meat products wherein they can be used. They further possess high concentrations of amino acid such as alanine, arginine, aspartic acid, cystine, glutamic acid, glycine, phenylalanine, histidine, isoleucine, leucine, lysine, methionine proline, serine, threonine, tyrosine and/or valine which provide them with good properties for use thereof in meat products which provide the benefits of meat to the diet and in order to prevent diseases. The functional collagen proteins of the first aspect, due to the high proline and/or hydroxyproline content thereof, provide good properties for use thereof in diet/nutritional supplements to prevent or mitigate diseases or pathologies related to collagen deficiency such as loss elasticity and smoothness of the skin, hair and nails, as well as to prevent or mitigate joint, ligament, tendon and/or muscle pain.

The second aspect of the present invention is related to a process for preparing the functional collagen proteins of the first aspect. The process of the second aspect enables the meat waste, the surplus feedstock and the meat by-products generated in industrial processes to be transformed into value-added products such as the functional collagen proteins of the first aspect. It further allows obtaining insoluble functional non-collagen proteins (cracklings) and high quality fats which can be used in the manufacture of meat products, preferably hamburgers and sausages.

In the context of the present invention, the protein called cracklings refers to protein residues obtained from the melting of the fats, after the partial separation of the fat and the water contained in those protein residues.

The third aspect of the present invention is related to the use of the functional collagen proteins of the first aspect or the functional collagen proteins obtained from the process of the second aspect in the preparation of meat products and/or nutritional supplements. Said meat products may be selected from raw meat products or heat treated products.

Preferably, the products of the third aspect comprise the protein of the first aspect the source of which is chicken feedstock.

The fourth aspect of the present invention is related to the use of the fat, as by-product, obtained in the process of the second aspect for use thereof in the manufacture of meat products.

The fifth aspect of the present invention is related to the use of the insoluble non-collagen proteins or cracklings obtained, as by-product, in the process of the second aspect for use thereof in the manufacture of meat products, such as hamburgers or sausages.

The sixth aspect of the present invention is related to meat products and/or nutritional supplements comprising the proteins of the first aspect or the proteins obtained according to the process of the second aspect. Said meat products are selected from a list consisting of hamburgers, sausages, fingers, fillets in batter, chicken stock, chicken stock cubes, chicken croquettes, chicken pizza, chicken skewers, chicken meat balls, stuffed roasted chicken.

The seventh aspect of the present invention is related to a commercial kit comprising at least the following elements:

- the meat products of the sixth aspect of the invention;
- a suitable packaging for preserving said meat products;
- a label which contains nutritional information and information about the expiry date of said meat products.

DETAILED DESCRIPTION OF THE INVENTION

The first aspect of the present invention is related to functional collagen proteins of poultry origin, the origin of which can be selected from a list consisting of chicken, turkey, duck and ostrich, preferably of chicken and which are characterised in that they are soluble in water, have the ability to form gels and have a percentage by weight of hydroxyproline greater than 8 % with respect to the total weight of the functional collagen protein, preferably the percentage by weight of hydroxyproline with respect to the total is comprised in a range from 8 % to 12 % (% w/w).

In a preferred embodiment, the functional collagen protein of the first aspect is obtained from the feet, the skin, bones, tailbone, tendons, wing tips or carcasses of poultry origin or mixtures thereof. Preferably, they are obtained from chicken.

In a preferred embodiment, the functional collagen protein of the first aspect is further characterised in that the protein is in powder form, wherein 86 % of the volume of the particles measured by granulometry, have a diameter equal to or less than 150 μm, preferably less than 120 μm, more preferably 106 μm.

In a preferred embodiment, the functional collagen protein of the first aspect is further characterised in that the percentage by weight of fats with respect to the total of the functional collagen protein is between 0.5 % to 5 %, more preferably the percentage by weight of fats is between 1 % to 5 %, even more preferably, the percentage by weight of fats is between 0.5 % to 4 %.

In a preferred embodiment, the functional collagen protein of the first aspect is further characterised in that the percentage by weight of the protein content thereof, with respect to the total of the functional collagen protein, is equal to or less than 90 %. Preferably, the percentage by weight of protein content is equal to or less than 85 % and more preferably the percentage by weight of protein content is equal to or less than 80 %.

In a preferred embodiment, the functional collagen protein of the first aspect is further characterised in that the percentage by weight of moisture with respect to the total of the functional collagen protein is comprised in a range from 2 % to 4 %.

In another preferred embodiment, the functional collagen protein of the first aspect is further characterised in that the percentage by weight of ashes, with respect to the total of the functional collagen protein, is comprised in a range from 5 to 10 %.

In another preferred embodiment, the functional collagen protein of the first aspect is further characterised in that the percentage by weight of heavy metals is equal to or smaller than 100 $\mu$g/g (100 ppm).

In another preferred embodiment, the functional collagen protein of the first aspect is further characterised in that it does not contain genetically modified organisms.

In another preferred embodiment, the functional collagen protein of the first aspect is characterised in that it has a nutritional value in a range from 325 to 500 kcal /100 g, more preferably in a range from 350 to 500 kcal /100 g.

In another preferred embodiment, the functional collagen protein of the first aspect comprises:

- glutamic acid in a percentage by weight equal to or greater than 8 %, with respect to the total protein content present in the functional collagen protein,
- glycine in a percentage by weight equal to or greater than 14 %, with respect to the total protein content present in the functional collagen protein,
- lysine in a percentage by weight equal to or greater than 2.4 %, with respect to the total protein content present in the functional collagen protein,
- and/or proline in a percentage by weight equal to or greater than 7 %, with respect to the total protein content present in the functional collagen protein.

In a particular embodiment, the functional collagen protein of the first aspect is further characterised in that:

- the functional collagen protein is obtained from feedstock comprising chicken feet and/or tendons;
- the percentage by weight of fats with respect to the total of the functional collagen protein is comprised in a range from 0.1 % to 3 %; and
- it has a nutritional value in a range from 425 to 500 kcal /100 g.

In another particular embodiment, the functional collagen protein of the first aspect is further characterised in that:

- the functional collagen protein is obtained from feedstock comprising skin, bones, tendons, tailbone, chicken wing tips or carcasses or mixes thereof;
- the percentage by weight of fats with respect to the total of the functional collagen protein is comprised in a range from 0.1 % to 5 %;

- it has a nutritional value in a range from 325 up to 425 kcal /100 g; and
- and optionally it has roasted chicken smell.

The second aspect of the present invention is related to a process for preparing the proteins of the first aspect. The process of the second aspect exhibits the advantage that it enables the meat waste, the surplus feedstock and/or the by-products of poultry origin generated in industrial processes to be transformed into value-added products such as the proteins of the first aspect which are useful in the production of meat products, with low fat content, good taste and good texture. Likewise, it allows obtaining non-collagen insoluble proteins, also called cracklings and high quality fats which can be used in the manufacture of meat products. The process of the second aspect contributes to ensuring the health and hygiene quality of the proteins of the first aspect and of the meat products of the third aspect while being an industrially viable and environmentally-friendly process.

The process of the second aspect is related to a process for preparing the proteins of the first aspect and comprises at least the steps of:

a) subjecting the feedstock of poultry origin to a stirring and cooking process in a temperature range between 75 to 100 °C to provide a mixture which comprises a liquid phase containing insoluble proteins and a solid phase which comprises soluble collagen proteins;

b) subjecting the mixture obtained in step a) to a pressing process in a double action press comprising a filter with a mesh aperture equal to or less than 0.2 mm to separate and provide a liquid phase containing soluble collagen proteins and a solid phase containing insoluble proteins;

or

subjecting the mixture obtained in step a) to a decanting process to separate and provide a solid phase which comprises insoluble proteins and a liquid phase which comprises soluble collagen proteins;

wherein during the decanting process, the product of step a) is subjected to a speed in a range between 2700-3300 rpm; and preferably the separation process by means of decanting is performed with a device called Decanter centrifuge;

c) selecting the liquid phase obtained in step b) and subjecting it to a temperature in a range between 90-115 °C;

d) subjecting the mixture of the preceding step to at least one phase separation process by means of centrifuges to obtain 3 phases, wherein a first phase comprises fats, a second phase comprises soluble collagen proteins and a third phase comprises sludge; preferably this step of separation of the three phases is performed with a device called Tricanter;

e) optionally, selecting the second phase which comprises the soluble collagen proteins and subjecting it to a centrifugation process at a speed range between 400-500 rpm, to eliminate any residual fat of the preceding step and transfer the phase containing the soluble collagen protein obtained to a tank wherein it is kept at a temperature in a range between 90-115 °C;

f) eliminating the water residues present in the soluble protein obtained in the preceding steps d) or e) as applicable, by means of evaporation, to provide a soluble collagen protein with a density in a range between 1.05-1.07 g/l and/or a percentage of moisture in a range between 65-75 %; preferably between 68-73 %;

g) drying the product obtained in the preceding step, subjecting the product to a temperature range between 100-110 °C to provide a soluble functional collagen protein with a percentage of moisture equal to or less than 4 %;

h) optionally, micronising the product of the preceding step to provide the soluble functional collagen protein wherein 86 % of the volume of the particles measured by granulometry have a diameter equal to or less than 150 $\mu$m.

In the context of the present invention, the terms mesh aperture and mesh size are synonyms and are used interchangeably.

The feedstock of poultry origin can be meat waste, surplus feedstock and/or by-products derived from poultry which are selected from a list consisting of chicken, turkey, duck, ostrich or mixtures thereof. In a preferred embodiment, the feedstock of poultry origin of step a) comes from different parts of the chicken. More preferably, the different parts of the animal, that may be chicken, are selected from a list consisting of, feet, skin, bones, tendons, tailbone, wing tips, chicken carcasses and mixtures thereof.

In the context of the present invention, the term Decanter refers to a sedimentation tank around a shaft, wherein the solid particles, which are heavier than the liquid, fall by gravity and form a sediment (solid phase) at the bottom. A Decanter can be a centrifuge (also referred to as Decanter centrifuge) wherein the separation of the solid and the liquid phase takes place due to centrifugal acceleration. In the rotating drum of the centrifuge, the solid particles, which have a higher density and are therefore heavier than the liquid, move outwards due to the centrifugal force, thus generating a sediment in the inner wall of the centrifuge drum.

In the context of the present invention, a Tricanter is a type of decanter centrifuge, which allows the simultaneous separation of three phases, i.e., the simultaneous separation of two non-miscible liquid phases with different densities and a solid phase.

In the context of the present invention, the term micronise refers to the reduction of the particle size of a solid, by means of the adequate procedure, until reaching a size in the range of microns.

In a preferred embodiment of the process of the second aspect, the stirring speed of step a) is comprised in a range from 1000 to 1600 rpm, preferably in a range between 1200 to 1500 rpm.

In another preferred embodiment of the process of the second aspect, the cooking process of step a) is performed by immersion in water or by applying direct steam over the feedstock used and/or the cooking time is comprised in a range from 30 to 60 min, preferably, between 30-45 min.

In another preferred embodiment of the process of the second aspect, it further comprises a pretreatment step of the feedstock before step a) comprising the reduction in size of the feedstock by means of a mincing process to obtain a particle size of the feedstock of less than 10 mm. The object of the mincing process is to reduce the size of the feedstock.

In another particular embodiment of the process of the second aspect, the product obtained in step a) is transferred to the press of step b) by means of an auger screw.

In another preferred embodiment of the process of the second aspect, the double action press of step b) works at a speed in a range between 300-450 rpm, preferably in a range between 350 to 400 rpm.

In another preferred embodiment of the process of the second aspect, in step c) the liquid phase selected from step b) is sent to a homogenisation tank wherein the temperature is kept controlled in a range from 90 to 115 °C.

In another preferred embodiment of the process of the second aspect, the vertical centrifugation process of step d) is performed with a pump that operates at a speed from 45 to 60 Hz and with an unloading time of at least 15 minutes, preferably from 15 to 60 minutes. Preferably, the process of separation of phases is performed at least once by means of vertical centrifuges; more preferably, it is performed 2 or more times.

In a particular embodiment of the process of the second aspect, the process is characterised in that it further comprises an additional step after step d) wherein the fats comprised in the first phase are transferred to a tank and are kept at a temperature between 60-80 °C, preferably at a temperature of 70 °C. Subsequently, the fat is propelled by means of a pump through pipes towards the storage tanks up to delivery thereof.

In a particular embodiment of the process of the second aspect, the dregs generated during the centrifugation process of step d) can be reused by means of introduction thereof to the press of the preceding step.

In another preferred embodiment of the process of the second aspect, the process of step f) is performed by applying a pressure equal to or less than 6 bars and/or a temperature equal to or less than 80 °C, preferably between 80-70 °C. These conditions facilitate obtaining the soluble protein with an optimal density in a range between 1.05-1.07 g/l and/or a percentage of moisture in a range from 65 % to 75 %, preferably from 68 % to 73 % and obtaining the functional collagen protein with the good properties of the invention, such as the texture thereof and the percentage of water in the functional collagen protein.

In a particular embodiment of the process of the second aspect, the heating of step g) is performed by applying steam at a pressure between 7-9 bars, preferably between 8-9 bars and stirring the product with a rate of rotation of 300-400 rpm. Preferably, the product of step g) is dried by means of contact roller devices. This drying system and said conditions facilitate the evaporation of the aqueous content of the protein obtained in this step, providing the functional collagen protein with a percentage by weight of moisture equal to or less than 4 %, preferably between 0.5 % to 4 %.

Another particular embodiment of the second aspect of the present invention, the process further comprises the steps of:

i) selecting the solid phase which comprises the insoluble protein obtained in step b) and subjecting it to a decanting process in which a speed of 2700-3300 rpm is applied to separate the solid phase from the liquid phase;

j) optionally, preparing an emulsion mixing the solid phase obtained in the preceding step with the liquid phase obtained in step b) comprising the soluble collagen protein, wherein the weight ratio between the solid phase and the liquid phase is between 5:1 to 1:1;

k) subjecting the product obtained in the preceding step as applicable, i) or j), to a drying process in a temperature range between 90-115 °C, while stirring is applied at a speed range between 1200-1500 rpm; to provide the insoluble non-collagen crackling protein; and

l) optionally, subjecting the product obtained in the preceding step to a particle size reduction process, wherein at least 100 % of particles have a diameter of less than 1000 microns, measured by granulometry, preferably of less than 500 microns.

The process of the second aspect of the invention further provides the "crackling" protein, non-collagen insoluble functional protein, as by-product, which is suitable for use thereof in the manufacture of meat products, such as hamburgers or sausages. The insoluble functional non-collagen proteins or cracklings do not comprise hydroxyproline.

The third aspect of the present invention is related to the use of the functional collagen proteins of the first aspect or the functional collagen proteins obtained from the process of the second aspect in the preparation of meat products and/or nutritional supplements. Said meat products may be selected from raw meat products or heat treated products. Preferably, said raw meat products, may be selected from raw meat products, be fresh, fermented and/or salted and the heat treated products may be selected from dry meats and moulded meats; cured and smoked whole pieces; semi-finished meat products and preserved meats.

More preferably, the meat products from the third aspect may be selected from a list consisting of hamburgers, sausages, fresh sausages, fresh pork botifarra, spread mince, raw meat mass, bratwurst, mettwurst, dry sausages, salamis, spreadable pastes, raw ham, raw fermented pepperoni and bacon, sobrassada, pepperoni, cervelat, cold cuts, salted giblets, pancetta, dry cured beef, hams, bacon, smoked pork loin, shoulder ham, croquettes, meat preserves, formed products, selected from; meat sticks, fingers, nuggets, breaded products and semi-cooked products, selected from meat stock cubes or chicken stock concentrate, stuffed roasted chicken, croquettes and meat balls.

The use of the proteins of the first aspect or the proteins obtained from the process of the second aspect in the production of meat products provides products with low fat content, high nutritional value, good taste and good texture. Another particular embodiment of the third aspect of the present invention is related to the use of the proteins of the first aspect or the proteins obtained from the process of the second aspect in the production of nutritional supplements, providing products with a high amino acid content, preferably with a high content by weight of glutamic acid, glycine, lysine, hydroxyproline and/or proline, in addition to providing products with low fat content, high nutritional value, good taste and good texture.

The fourth aspect of the present invention is related to the use of the fat obtained in step d) of the process of the second aspect for use thereof in the manufacture of meat products.

The fifth aspect of the present invention is related to the use of the insoluble functional non-collagen cracklings proteins, obtained in the process of the second aspect for use thereof in the manufacture of meat products, such as hamburgers or sausages.

The sixth aspect of the present invention is related to meat products or nutritional supplements comprising the proteins of the first aspect or the proteins obtained according to the process of the second aspect. Said meat products are selected from a list consisting of; hamburgers, sausages, fresh sausages, fresh pork botifarra, spread mince, raw meat mass, bratwurst, mettwurst, dry sausages, salamis, spreadable pastes, raw ham, raw fermented pepperoni and bacon, sobrassada, pepperoni, cervelat, cold cuts, salted giblets, pancetta, dry cured beef, hams, bacon, smoked pork loin, shoulder ham, croquettes, meat preserves, formed products, selected from; meat sticks, fingers, nuggets, breaded products and semi-cooked products, selected from meat stock cubes or chicken stock concentrate, stuffed roasted chicken, croquettes and meat balls.

The meat products of the sixth aspect have the advantage of having a good smell and texture, as well as a low fat content, low sugar content, high protein content and high nutritional value.

In a particular embodiment, the meat products of the sixth aspect have roasted chicken smell.

The seventh aspect of the present invention is related to a commercial kit comprising at least the following elements:

- the meat products of the sixth aspect of the invention;
- a suitable packaging for preserving said meat products;
- a label which contains nutritional information and information about the expiry date of said meat products.

The term suitable packaging comprises polymer materials selected from a list consisting of polyethylene, polypropylene, polyethylene terephthalate (PET), polylactic acid and mixtures thereof. The label which contains information may be adhered or printed on the packaging.

The following embodiments included below represent other embodiments which are part of the invention

1. A functional collagen protein characterised in that it has a percentage by weight of hydroxyproline with respect to the total greater than 8 %.

2. The functional collagen protein according to the preceding embodiment, wherein the percentage by weight of hydroxyproline with respect to the total is comprised in a range from 8 % to 12 %.

3. The functional collagen protein according to any of the preceding embodiments, obtained from feedstock of poultry origin.

4. The functional collagen protein according to any of the preceding embodiments, wherein the feedstock of poultry origin is selected from a list consisting of chicken, turkey, duck, ostrich and mixtures thereof.

5. The functional collagen protein according to any of the preceding embodiments, wherein the feedstock of poultry origin comprises different parts of the poultry selected from the list consisting of the feet, the skin, bones, tailbone, wing tips, tendons, carcasses or mixtures thereof.

6. The functional collagen protein according to any of the preceding embodiments, wherein 86 % of the volume of the particles measured by granulometry, have a diameter equal or smaller than 150 $\mu$m.

7. The functional collagen protein according to any of the preceding embodiments, comprising fats in a percentage by weight with respect to the total, between 0.5 % to 5 %.

8. The functional collagen protein according to any of the preceding embodiments, wherein the percentage by weight of fats is between 1 % to 5 % with respect to the total.

9. The functional collagen protein according to any of the preceding embodiments, comprising moisture in a percentage by weight with respect to the total in a range from 0.5 % to 4 %.

10. The functional collagen protein according to any of the preceding embodiments, wherein the percentage by weight of moisture with respect to the total is comprised in a range from 2 % to 4 %.

11. The functional collagen protein according to any of the preceding embodiments, comprising ashes in a percentage by weight with respect to the total, in a range from 5 % to 10 %.

12. The functional collagen protein according to any of the preceding embodiments, comprising a protein content, in a percentage by weight with respect to the total, equal to or less than 90 %.

13. The functional collagen protein according to any of the preceding embodiments, wherein the percentage by weight of the protein content with respect to the total is equal to or less than 85 %.

14. The functional collagen protein according to any of the preceding embodiments, wherein the percentage by weight of the protein content with respect to the total is equal to or less than 80 %.

15. The functional collagen protein according to any of the preceding embodiments, which does not comprise genetically modified organisms.

16. The functional collagen protein according to any of the preceding embodiments, comprising heavy metals in a percentage by weight with respect to the total, equal to or less than 100 $\mu$g/g.

17. The functional collagen protein according to any of the preceding embodiments, which exhibits the ability to form gels, ability to provide texture to the meat products and/or emulsifying ability.

18. The functional collagen protein according to any of the preceding embodiments, which exhibits a nutritional value in a range between 325 to 500 kcal /100 g

19. The functional collagen protein according to any of the preceding embodiments, wherein the nutritional value is comprised in a range between 350 to 500 kcal /100 g

20. The functional collagen protein according to any of the preceding embodiments, comprising:

- glutamic acid in a percentage by weight equal to or greater than 8 %, with respect to the total protein content present in the functional collagen protein,
- glycine in a percentage by weight equal to or greater than 14 %, with respect to the total protein content present in the functional collagen protein,
- lysine in a percentage by weight equal to or greater than 2.4 %, with respect to the total protein content present in the functional collagen protein,
- and/or proline in a percentage by weight equal to or greater than 7 %, with respect to the total protein content present in the functional collagen protein.

21. The functional collagen protein according to any of embodiments 1-20, wherein:

- the functional collagen protein is obtained from a feedstock comprising chicken feet and/or tendons; and
- the percentage by weight of fats with respect to the total is comprised in a range from 0.1 % to 3 %.

22. The functional collagen protein according to embodiment 21, which exhibits a nutritional value in a range between 425 to 500 kcal /100 g.

23. The functional collagen protein according to any of embodiments 1-20, wherein:

- the functional collagen protein is obtained from a feedstock comprising skin, bones, tailbone, tendons, chicken wing tips or carcasses or mixes thereof;
- the percentage by weight of fats with respect to the total, is in a range from 0.1 % to 5 %;
- and optionally it has roasted chicken smell.

24. The functional collagen protein according to embodiment 23, which exhibits a nutritional value in a range between 325 to 425 kcal /100 g.

25. A process for obtaining the functional collagen protein according to embodiments 1-24 comprising at least the steps of:

a) subjecting the feedstock of poultry origin to a stirring and cooking process in a temperature range between 75 to 100 °C to provide a mixture which comprises a liquid phase containing an insoluble protein and a solid phase which comprises a soluble collagen protein;

b) subjecting the mixture obtained in the step a) to a pressing process in a double action press which comprises a filter with a mesh aperture equal to or less than 0.2 mm to separate and provide a liquid phase which comprises a soluble collagen protein and a solid phase which comprises an insoluble protein;

or

subjecting the mixture obtained in step a) to a decanting process to separate and provide a solid phase which comprises an insoluble protein and a liquid phase which comprises a soluble collagen protein and;

wherein during the decanting process, the product of step a) is subjected to a speed in a range between 2700-3300 rpm;

c) selecting the liquid phase obtained in step b) and subjecting it to a temperature in a range between 90-115 °C;

d) subjecting the mixture of the preceding step to at least one phase separation process by means of centrifuges to obtain 3 phases, wherein a first phase comprises fats, a second phase comprises soluble collagen proteins and a third phase comprises sludge;

e) optionally, selecting the second phase which comprises the soluble collagen proteins and subjecting it to a centrifugation process at a speed range between 400-500 rpm, to eliminate any residual fat from the preceding step and transfer the phase containing the soluble collagen protein obtained to a tank where it is kept at a temperature in a range between 90-115 °C;

f) eliminating the water residues present in the soluble protein obtained in the preceding steps d) or e) as applicable, by means of evaporation, to provide a soluble collagen protein with a density in a range between 1.05-1.07 g/l and/or a percentage of moisture in a range between 65-75 %;

g) drying the product obtained in the preceding step, subjecting the product to a temperature range between 100-110 °C to provide a soluble functional collagen protein with a percentage of moisture equal to or less than 4 %;

h) optionally, micronising the product of the preceding step to provide the soluble functional collagen protein wherein 86 % of the volume of the particles measured by granulometry have a diameter equal or smaller than

150 μm.

26. The process according to the preceding embodiment wherein the feedstock derives from different parts of the chicken.

27. The process according to any of embodiments 25-26, wherein the stirring speed of step a) is comprised in a range from 1000 to 1600 rpm.

28. The process according to any of embodiments 25-27, wherein the cooking process is performed by immersion in water or by applying direct steam and/or the cooking time comprises a range between 30-60 min, preferably, between 30-45 min.

29. The process according to any of embodiments 25-28, wherein the double action press of step b) works at a speed in a range between 300-450 rpm, preferably in a range between 350 to 400 rpm.

30. The process according to any of embodiments 25-29, wherein the product obtained in step a) is transferred to the press of step b) by means of an auger screw.

31. The process according to any of embodiments 25-30, wherein the vertical centrifugation process of step d) is performed with a pump that operates at a speed from 45 to 60 Hz and with an unloading time of at least 15 minutes.

32. The process according to any of embodiments 25-31, wherein the process of step f) is performed by applying a pressure equal to or less than 6 bars and/or a temperature of 80 °C.

33. The process according to any of embodiments 25-32, wherein the heating of step g) is performed by applying steam at a pressure between 8-9 bars and by stirring the product with a rate of rotation of 300-400 rpm.

34. The process according to any of embodiments 25-33, which further comprises a pretreatment step of the feedstock before step a) comprising the reduction in size of the feedstock by means of a mincing process to obtain a particle size of the feedstock of less than 10 mm.

35. The process according to any of embodiments 25-34, which further comprises an additional step after step d) wherein the fats comprised in the first phase are transferred to a tank and are kept at a temperature between 60-80 °C.

36. The process according to any of embodiments 25-35, which further comprises the steps:

   i) selecting the solid phase which comprises the insoluble protein obtained in step b) and subjecting it to a decanting process in which a speed of 2700-3300 rpm is applied to separate the solid phase from the liquid phase;
   j) optionally, preparing an emulsion mixing the solid phase obtained in the preceding step with the liquid phase obtained in step b) comprising the soluble collagen protein, wherein the weight ratio between the solid phase and the liquid phase is between 5:1 to 1:1;
   k) subjecting the product obtained in the preceding step as applicable, i) or j), to a drying process in a temperature range between 90-115 °C, while stirring is applied at a speed range between 1200-1500 rpm to provide the insoluble cracklings protein; and
   l) optionally, subjecting the product obtained in the preceding step to a particle size reduction process, wherein at least 100 % of particles have a diameter of less than 1000 microns, measured by granulometry, preferably of less than 500 microns.

37. A use of the proteins according to embodiments 1-24 or the proteins obtained from the process according to clauses 25-36 in the preparation of meat products.

38. The use of the proteins according to the preceding embodiment wherein the meat products are selected from a list consisting of hamburgers, sausages, fresh sausages, fresh pork botifarra, spread mince, raw meat mass, bratwurst, mettwurst, dry sausages, salamis, spreadable pastes, raw ham, raw fermented pepperoni and bacon, sobrassada, pepperoni, cervelat, cold cuts, salted giblets, pancetta, dry cured beef, hams, bacon, smoked pork loin, shoulder ham, croquettes, meat preserves, formed products, selected from; meat sticks, fingers, nuggets, breaded products and semi-cooked products, selected from meat stock cubes or chicken stock concentrate, stuffed roasted chicken, croquettes and meat balls.

39. A use of the fat obtained in step d) of the process according to embodiment 35, for use thereof in the manufacture of meat products.

40. Use of the insoluble cracklings protein obtained in any of steps k) or l) of the process according to embodiment 36, for use thereof in the manufacture of meat products, preferably hamburgers or sausages.

41. Meat products characterised in that they comprise the proteins according to embodiments 1-24 or the proteins obtained according to any of embodiments 25-35.

42. The meat products according to the preceding embodiment selected from the list consisting of hamburgers, sausages, fresh sausages, fresh pork botifarra, spread mince, raw meat mass, bratwurst, mettwurst, dry sausages, salamis, spreadable pastes, raw ham, raw fermented pepperoni and bacon, sobrassada, pepperoni, cervelat, cold cuts, salted giblets, pancetta, dry cured beef, hams, bacon, smoked pork loin, shoulder ham, croquettes, meat preserves, formed products, selected from; meat sticks, fingers, nuggets, breaded products and semi-cooked products, selected from meat stock cubes or chicken stock concentrate, stuffed roasted chicken, croquettes and meat balls.

43. A commercial kit characterised in that it comprises at least the elements:

- the meat products according to any of embodiments 41-42;
- a suitable packaging for preserving said meat products;
- a label which contains nutritional information and information about the expiry date of said meat products.

44. The commercial kit according to the preceding embodiment, wherein the term suitable packaging comprises polymer materials selected from a list consisting of polyethylene, polypropylene, polyethylene terephthalate (PET), polylactic acid and mixtures thereof.

EXAMPLES

Example 1 - Process for obtaining the proteins of the first aspect.

The feedstock that was received was composed of sanitised chicken feet. The feedstock was preserved in the original containers thereof and was transported to a mincing line where it was dropped in the corresponding hoppers. The product was deposited on conveyor belts, by means of auger screws, which moved it directly to the corresponding mincers to reduce the particle size thereof to 8 mm, which facilitated the cooking and melting of the feedstock. Both the conveyor belt and the mincer applied a speed of 900-1000 rpm.

Subsequently, the product obtained was subjected to a cooking process in water in a temperature range between 75 to 100 °C, while it was stirred at a speed between 1200-1500 rpm during 30-45 minutes. Once this step was completed, a product was generated which comprises a mixture which contains a liquid phase which comprises an insoluble protein and a solid phase comprising a soluble collagen protein. The mixture obtained in the preceding step was transferred in an auger screw to a double action press at a speed of 350-400 rpm with a filter with a mesh size (mesh aperture) of 0.2 mm, to separate the phases and provide a liquid phase which comprised an insoluble protein and a solid phase which comprised a soluble collagen protein.

Subsequently, the liquid phase obtained in step b) was selected, it was sent to a homogenising tank wherein it was kept at a controlled temperature in a range from 90 to 115 °C. Next, the mixture of the preceding step was subjected to a phase separation process by means of vertical centrifuges. Said centrifuges made use of a pump which provided a speed from 45 to 60 Hz and with an unloading time of at least 15 minutes to obtain 3 phases. A first phase was obtained containing fats, a second phase containing soluble proteins and a third phase containing sludge. The process was repeated once more to improve yield.

Afterwards, the water residues present in the soluble collagen protein obtained in the preceding step were eliminated by means of evaporation at a pressure of 6 bars and a temperature of 80 °C and a soluble collagen protein was obtained characterised in that it has a density in a range between 1.05-1.07 g/l and a moisture percentage in a range between 65-75 %. Lastly, the product obtained in the preceding step was dried by means of contact roller devices at a temperature range between 100-110 °C by applying steam at a pressure between 8.5 bars and by stirring the product with a rate of rotation of 330 rpm to provide a soluble non-collagen protein characterised in that it has a moisture percentage equal to or less than 4 %;

Example 2 - Process for obtaining the proteins of the first aspect.

The feedstock that was received was composed of minced bone, tailbone and wing tips and sanitised chicken carcasses. The feedstock preserved in the original containers thereof was transported to a mincing line and it was dropped in the corresponding hoppers. The product was deposited, by means of auger screws, on conveyor belts which moved it directly to the corresponding mincers to reduce the particle size thereof to 8 mm, which facilitated the cooking and melting of the feedstock. Both the conveyor belt and the mincer applied a speed of 900-1000 rpm.

Subsequently, the product obtained was subjected to a steam cooking process in a temperature range between 75 to 100 °C and while it was stirred at a speed between 1200-1500 rpm during 30-45 minutes. Once this step was completed, a product was generated which comprises a mixture which contains a liquid phase which comprises an insoluble protein and a solid phase comprising a soluble collagen protein. The mixture obtained in the preceding step was transported in an auger screw to a double action press at a speed of 350-400 rpm with a filter with a mesh size of 0.2 mm, to separate the phases and provide a liquid phase which comprises an insoluble protein and a solid phase which comprises a soluble collagen protein.

Next, the liquid phase obtained in the preceding step was selected and was sent to a homogenising tank wherein it was kept at a controlled temperature in a range from 90 to 115 °C. Then, the mixture of the preceding step was subjected to a phase separation process by means of vertical centrifuges comprising a pump that operates at a speed from 45 to 60 Hz and with an unloading time of at least 15 minutes to obtain 3 phases. A first phase was obtained containing fats, a second phase containing soluble collagen proteins and a third phase containing sludge. The process was repeated once more to improve yield.

Next, the water residues present in the soluble protein obtained in the preceding step were eliminated by means of evaporation at a pressure of 6 bars and a temperature of 80 °C, to provide a soluble protein with a density in a range between 1.05-1.07 g/l and a percentage of moisture in a range between 68-73 %. Lastly, the product obtained in the preceding step was dried by means of contact roller devices at a temperature range between 100-110 °C by applying steam at a pressure between 8.5 bars and by stirring the product with a rate of rotation of 330 rpm to provide a soluble collagen protein with a moisture percentage equal to or less than 4 %;

Example 3 - Process for obtaining the proteins of the first aspect.

The feedstock that was received, was composed of chicken skin. The feedstock preserved in the original containers thereof was transported to a mincing line and it was dropped in the corresponding hoppers. The product obtained was deposited, by means of auger screws, on conveyor belts, which transferred it directly to the corresponding mincers to reduce the particle size thereof to 8 mm, which facilitated the cooking and melting of the feedstock. Both the conveyor belt and the mincer applied a speed of 900-1000 rpm.

Subsequently, the product obtained was subjected to a cooking process in water in a temperature range between 75 to 100 °C and while it was stirred at a speed between 1200-1500 rpm during 30-45 minutes. Once this step was completed, a product was generated which comprises a mixture which contains a liquid phase which comprises an insoluble protein and a solid phase which comprises a soluble collagen protein.

The mixture obtained in the preceding step was transported by an auger screw to a decanter and said mixture was subjected to a decanting process at a speed of 3000 rpm to separate the phases. A solid phase which comprises insoluble non-collagen protein and a liquid phase which comprises a soluble collagen protein was provided.

Subsequently, the liquid phase obtained in the preceding step was selected and was sent to a homogenising tank wherein it was kept at a controlled temperature in a range from 90 to 115 °C. Next, the mixture of the preceding step was subjected to a phase separation process by means of vertical centrifuges comprising a pump that operates at a speed from 45 to 60 Hz and with an unloading time of at least 15 minutes to obtain 3 phases. A first phase contained fats, a second phase containing soluble collagen proteins and a third phase containing sludge. The process was repeated once more to improve yield.

Then, the water residues present in the soluble collagen protein obtained in the preceding step were eliminated by means of evaporation, by applying a pressure of 6 bars and a temperature of 80 °C, to provide a soluble collagen protein characterised in that it has a density in a range between 1.05-1.07 g/l and a percentage of moisture in a range between 68-73 %. Lastly, the product obtained in the preceding step was dried by means of contact roller devices at a temperature range between 100-110 °C by applying steam at a pressure between 8.5 bars and by stirring the product with a rate of rotation of 330 rpm to provide a soluble collagen protein with a moisture percentage equal to or less than 4 %. Characterisation of the proteins of the first aspect, of examples 1, 2 and 3.

Table 1: Physicochemical properties of the proteins of the first aspect of the examples 1, 2 and 3.

| | Content % by weight | | |
|---|---|---|---|
| **Physicochemical properties** | **Example 1** | **Example 2** | **Example 3** |
| **Moisture** | 4 % | 3% | 3% |
| **Fat** | 3 % | 5% | 5% |
| **Ashes** | 5% | 6% | 6% |
| **Protein content** | 87 % | 85 % | 85 % |
| **Hydrates** | <0.5 % | <0.5 % | <0.5 % |
| **Heavy metals** | <100 ppm | <100 ppm | < *100* ppm |

Table 2: organoleptic and nutritional properties of the proteins of the first aspect of the examples 1, 2 and 3.

| **Organoleptic properties** | Example 1 | Example 2 | Example 3 |
|---|---|---|---|
| Smell | Neutral | Roasted chicken | Roasted chicken |

(continued)

| Organoleptic properties | Example 1 | Example 2 | Example 3 |
|---|---|---|---|
| Flavour | Salted | Salted | Salted |
| **Nutritional properties** | Example 1 | Example 2 | Example 3 |
| Energy value (kcal): | 464 | 382 | N.A. |
| Hydroxyproline content (g/100 g of functional protein) | 10.7 | 10.7 | 10.7 |
| Particle size ($\mu$m) | 106 | 106 | 106 |

Table 3: Aminogram of the proteins of the first aspect of the examples 1 and 2, wherein the % by weight of each amino acid with respect to the protein content present in the functional protein is included.

| | % by weight of each amino acid with respect to the protein content present in the functional protein | |
|---|---|---|
| **AMINO ACID** | Example 1 | Example 2 |
| Alanine | 6.51 | 7.02 |
| Arginine | 5.49 | 5.9 |
| Aspartic acid | 4.18 | 4.9 |
| Cystine | 0.15 | 0.26 |
| Glutamic acid | 8.11 | 10.05 |
| Glycine | 15.9 | 15.8 |
| Histidine | 0.64 | 1.1 |
| Isoleucine | 1.08 | 1.32 |
| Leucine | 2.32 | 2.91 |
| Methionine | 0.65 | 0.79 |
| Phenylalanine | 1.59 | 1.78 |
| Proline | 8.34 | 8.33 |
| Serine | 1.89 | 2.22 |
| Threonine | 1.52 | 1.77 |
| Thyrosine | 0.55 | 0.81 |
| Valine | 1.5 | 1.84 |
| Lysine | 2.74 | 3.42 |

Procedure for determining particle size by means of granulometry

The term granulometry, also known as mesh number, is the size distribution of a grain or particles, whether they are sands, gravel, or other granular mediums. Granulometry can be carried out by means of a screening machine, pile of meshes or sieves. Sieving is a separation procedure of a mixture of grains or particles into two or more size fractions, larger size materials are trapped over a mesh, while smaller size materials can pass through the mesh and be retained by other lower meshes. Meshes or sieves can be used in the piles, to divide the grains into several size fractions and therefore determine the particle size distributions.

The sieves that have been used have the following diameters: 1 mm; 500 $\mu$m; 320 $\mu$m; 250 $\mu$m; and 106 $\mu$m.

In practice, the weights of each size are expressed as percentages retained in each mesh with respect to the total of the sample. Both partial and accumulated retained percentages are calculated, in each mesh, as the graph of material values (granulometry) is traced using the latter.

Method:

The sieves are ordered in such a way that the sieve with the coarsest mesh aperture passage is placed at the top. Then, weighing is performed and the weight of each empty sieve is recorded. Next, we weight 100 g of sample and we add it on the sieves. Depending on the aperture passage of the different sieves, the force of gravity and the sieving motions, the different particles composing the sample are separated according to the size thereof. Once the sample is separated, the sieves are weighed with the amount of sample that has been retained in each one, independently. By calculating the weight difference between the sieve before starting the method (empty) and once measuring (full) is performed, the calculation of the sample retention percentage in each sieve is performed.

The sample percentage (%) in each type of sieve is calculated using the following formula:

$$\frac{(P2 - P1)}{Sample\ P} x100 = X\ \%$$

Wherein:

P1= weight of the empty sieve

P2= weight of the full sieve after the separation

Sample P= weight of the sample that we have sieved

For example, for the sieve with a mesh aperture of 106 microns the sample percentage with a particle diameter of less than 106 microns is 86 %.

Results for the examples 1, 2 and 3.

| Sieve (mesh aperture) | Percentage of particles in the sample |
|---|---|
| Particle size > 1 mm | 0.1 % |
| Particle size > 500 microns | 0.4 % |
| Particle size > 320 microns | 1.5 % |
| Particle size > 250 microns | 2.1 % |
| Particle size > 106 microns | 14 % |
| Particle size < 106 microns | 86 % |

**Claims**

1.  A functional collagen protein **characterised in that** it has a percentage by weight of hydroxyproline with respect to the total greater than 8 %.

2.  The functional collagen protein according to the preceding claim, wherein the percentage by weight of hydroxyproline with respect to the total is comprised in a range from 8 % to 12 %.

3.  The functional collagen protein according to any of the preceding claims obtained from feedstock of poultry origin comprising different parts of the poultry selected from the list consisting of the feet, the skin, bones, tailbone, wing tips, tendons, carcasses or mixtures thereof.

4.  The functional collagen protein according to any of the preceding claims, wherein 86 % of the volume of the particles measured by granulometry, have a diameter equal to or less than 150 $\mu$m.

5.  The functional collagen protein according to - any of the preceding claims, comprising fats in a percentage by weight with respect to the total, between 0.5 % to 5 %, preferably wherein the percentage by weight of fats is between 1 % to 5 % with respect to the total and/or it comprises moisture in a percentage by weight with respect to the total

in a range from 0.5 % to 4 %, preferably the percentage by weight of moisture with respect to the total is comprised in a range from 2 % to 4 %.

6. The functional collagen protein according to any of the preceding claims comprising a protein content, in a percentage by weight with respect to the total, equal to or less than 90 %, preferably equal to or less than 85 %.

7. The functional collagen protein according to any of the preceding claims, which exhibits a nutritional value in a range between 325 to 525 kcal /100 g, preferably in a range between 350 to 500 kcal/100 g.

8. The functional collagen protein according to any of the preceding claims, comprising:

   - glutamic acid in a percentage by weight equal to or greater than 8 %, with respect to the total protein content present in the functional collagen protein,
   - glycine in a percentage by weight equal to or greater than 14 %, with respect to the total protein content present in the functional collagen protein,
   - lysine in a percentage by weight equal to or greater than 2.4 %, with respect to the total protein content present in the functional collagen protein,
   - and/or proline in a percentage by weight equal to or greater than 7 %, with respect to the total protein content present in the functional collagen protein.

9. A process for obtaining the functional collagen protein according to any of claims 1-8 comprising at least the steps of:

   a) subjecting the feedstock of poultry origin to a stirring and cooking process in a temperature range between 75 to 100 °C to provide a mixture which comprises a liquid phase containing an insoluble protein and a solid phase which comprises a soluble collagen protein;
   b) subjecting the mixture obtained in step a) to a pressing process in a double action press which comprises a filter with a mesh aperture equal to or less than 0.2 mm to separate and provide a liquid phase which comprises a soluble collagen protein and a solid phase which comprises an insoluble protein;
   or
   subjecting the mixture obtained in step a) to a decanting process to separate and provide a solid phase which comprises an insoluble protein and a liquid phase which comprises a soluble collagen protein and; wherein during the decanting process, the product of step a) is subjected to a speed in a range between 2700-3300 rpm;
   c) selecting the liquid phase obtained in step b) and subjecting it to a temperature in a range between 90-115 °C;
   d) subjecting the mixture of the preceding step to at least one phase separation process by means of centrifuges to obtain 3 phases, wherein a first phase comprises fats, a second phase comprises soluble collagen proteins and a third phase comprises sludge;
   e) optionally, selecting the second phase which comprises the soluble collagen proteins and subjecting it to a centrifugation process in a speed range between 400-500 rpm, to eliminate any residual fat from the preceding step and transfer the phase containing the soluble collagen protein obtained to a tank where it is -kept at a temperature in a range between 90-115 °C;
   f) eliminating the water residues present in the soluble protein obtained in the preceding steps d) or e) as applicable, by means of evaporation, to provide a soluble collagen protein with a density in a range between 1.05-1.07 g/l and/or a percentage of moisture in a range between 65-75 %;
   g) drying the product obtained in the preceding step, subjecting the product to a temperature range between 100-110 °C to provide a soluble functional collagen protein with a percentage of moisture equal to or less than 4 %;
   h) optionally, micronising the product of the preceding step to provide the soluble functional collagen protein wherein 86 % of the volume of the particles measured by granulometry, have a diameter equal or smaller than 150 μm.

10. The process according to claim 9, wherein the process of step f) is performed by applying a pressure equal to or less than 6 bars and/or a temperature of 80 °C and/or wherein the heating of step g) is performed by applying steam at a pressure between 8-9 bars and by stirring the product with a rate of rotation of 300-400 rpm.

11. The process according to any of claims 9-10, which further comprises the steps:

   i) selecting the solid phase which comprises the insoluble protein obtained in step b) and subjecting it to a decanting process at which a speed of 2700-3300 rpm is applied to separate the solid phase from the liquid phase;
   j) optionally, preparing an emulsion mixing the solid phase obtained in the preceding step with the liquid phase obtained in step b) comprising the soluble collagen protein, wherein the weight ratio between the solid phase and the liquid phase is between 5:1 to 1:1;

k) subjecting the product obtained in the preceding step as applicable, i) or j), to a drying process in a temperature range between 90-115 °C, while stirring is applied at a speed range between 1200-1500 rpm to provide the insoluble cracklings protein; and

l) optionally, subjecting the product obtained in the preceding step to a particle size reduction process , wherein at least 100 % of particles have a diameter of less than 1000 microns, measured by granulometry, preferably of less than 500 microns.

12. A use of the functional collagen protein according to claims 1-8 or the functional collagen protein obtained from the process according to claims 9-10 in the preparation of meat products, preferably the meat products are selected from a list consisting of hamburgers, sausages, fresh sausages, fresh pork botifarra, spread mince, raw meat mass, bratwurst, mettwurst, dry sausages, salamis, spreadable pastes, raw ham, raw fermented pepperoni and bacon, sobrassada, pepperoni, cervelat, cold cuts, salted giblets, pancetta, dry cured beef, hams, bacon, smoked pork loin, shoulder ham, croquettes, meat preserves, formed products, selected from; meat sticks, fingers, nuggets, breaded products and semi-cooked products, selected from meat stock cubes or chicken stock concentrate, stuffed roasted chicken , croquettes and meat balls.

13. A use of the fat obtained in step d) of the process according to claim 9 and/or a use of insoluble functional cracklings protein obtained in any of steps k) or l) of the process according to claim 11, in the manufacture of meat products, preferably hamburgers or sausages.

14. Meat products **characterised in that** they comprise the proteins according to claims 1-8 or the proteins obtained according to any of claims 9-11.

15. A commercial kit **characterised in that** it comprises at least the elements:

- the meat products according to claim 14;
- a suitable packaging for preserving said meat products;
- a label which contains nutritional information and information about the shelf life of said meat products.

Europäisches
Patentamt

European
Patent Office

Office européen
des brevets

# EUROPEAN SEARCH REPORT

Application Number

EP 20 38 2571

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymus: "Amino acid composition of collagen", Rousselot Health &Nutrition media blog, 28 December 2017 (2017-12-28), pages 1-7, XP055746181, Retrieved from the Internet: URL:https://www.rousselot.com/health/media/blog/amino-acid-composition-of-collagen [retrieved on 2020-11-02] * the whole document * | 1-8 | INV. A23J1/10 A23J1/02 A23J3/04 A23L13/40 |
| X | CN 105 963 686 A (QINGDAO HAYBORIC BIOTECHNOLOGY CO LTD) 28 September 2016 (2016-09-28) * example 2 * | 1-8 | |
| X | CN 105 969 830 A (CHENGDU KELE BIOTECHNOLOGY CO LTD) 28 September 2016 (2016-09-28) * examples 1-3 * | 1-8 | |
| X | EP 2 766 383 B1 (COUNCIL SCIENT IND RES [IN]) 8 August 2018 (2018-08-08) * paragraph [0043]; examples 1, 5,6 * | 1-8,12 | TECHNICAL FIELDS SEARCHED (IPC) A23J A23L |
| X | DATABASE GNPD [Online] MINTEL; 15 October 2019 (2019-10-15), anonymous: "Chicken Sausages with Tomato and Herbs", XP055746191, retrieved from www.gnpd.com Database accession no. 6951273 * abstract * | 14,15 | |

-/--

~~The present search report has been drawn up for all claims~~

| Place of search | Date of completion of the search | Examiner |
|---|---|---|
| Munich | 2 February 2021 | Munteanu, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt
European
Patent Office
Office européen
des brevets

**EUROPEAN SEARCH REPORT**

Application Number

EP 20 38 2571

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE GNPD [Online]<br>MINTEL;<br>2 October 2019 (2019-10-02),<br>anonymous: "Chicken Fingers",<br>XP055746192,<br>retrieved from www.gnpd.com<br>Database accession no. 6920425<br>* abstract * | 14,15 | |
| X | US 2008/292771 A1 (JACKMAN NICHOLAS ANTHONY [IE] ET AL)<br>27 November 2008 (2008-11-27) | 14 | |
| Y | * paragraph [0052] - paragraph [0079] *<br>* paragraph [0106] - paragraph [0121] *<br>* paragraph [0125] - paragraph [0131];<br>claims 1,9,13, 17, 18,20,22 *<br>* paragraph [0091] - paragraph [0092] * | 9,10 | |
| Y | CN 102 763 764 B (LONGYAO JINYE CONDIMENT CO LTD) 19 June 2013 (2013-06-19)<br>* claims 1-7; example 1 * | 9,10 | **TECHNICAL FIELDS SEARCHED (IPC)** |

~~The present search report has been drawn up for all claims~~

| Place of search | Date of completion of the search | Examiner |
|---|---|---|
| Munich | 2 February 2021 | Munteanu, I |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

page 2 of 2

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

9, 10

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

## LACK OF UNITY OF INVENTION
### SHEET B

Application Number

EP 20 38 2571

The Search Division considers that the present European patent application does not comply with the requirements of unity of invention and relates to several inventions or groups of inventions, namely:

1. claims: 1-8, 12(completely); 14, 15(partially)

   Collagen protein comprising at least 8% hydroxyproline and its use

   ---

2. claims: 9, 10

   Process for obtaining a collagen protein comprising at least 8% hydroxyproline

   ---

3. claims: 11, 13(completely); 14, 15(partially)

   Process for obtaining insoluble cracklings protein and its use

   ---

**EP 3 932 211 A1**

**ANNEX TO THE EUROPEAN SEARCH REPORT
ON EUROPEAN PATENT APPLICATION NO.**

EP 20 38 2571

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2021

| Patent document cited in search report | | Publication date | Patent family member(s) | | Publication date |
|---|---|---|---|---|---|
| CN 105963686 | A | 28-09-2016 | NONE | | |
| CN 105969830 | A | 28-09-2016 | NONE | | |
| EP 2766383 | B1 | 08-08-2018 | EP | 2766383 A1 | 20-08-2014 |
| | | | US | 2014296151 A1 | 02-10-2014 |
| | | | WO | 2013054363 A1 | 18-04-2013 |
| US 2008292771 | A1 | 27-11-2008 | BR | PI0619523 A2 | 04-10-2011 |
| | | | CA | 2632464 A1 | 14-06-2007 |
| | | | EP | 1976392 A2 | 08-10-2008 |
| | | | IE | 20060885 A1 | 08-08-2007 |
| | | | US | 2008292771 A1 | 27-11-2008 |
| | | | WO | 2007065917 A2 | 14-06-2007 |
| CN 102763764 | B | 19-06-2013 | NONE | | |

EPO FORM P0459

For more details about this annex : see Official Journal of the European Patent Office, No. 12/82

21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SRIHONGTHONG et al.** *the Protein Journal,* May 2012, vol. 31 (6), 466-76